## Europäisches Patentamt
## European Patent Office
## Office européen des brevets

(11) Numéro de publication : **0 060 155**
**B1**

(12)  
# FASCICULE DE BREVET EUROPÉEN

(45) Date de publication du fascicule du brevet :
**26.06.85**

(21) Numéro de dépôt : **82400216.6**

(22) Date de dépôt : **08.02.82**

(51) Int. Cl.⁴ : **H 04 J   3/07**

(54) Système de multiplexage et de démultiplexage avec justification.

(30) Priorité : **19.02.81 FR 8103688**

(43) Date de publication de la demande :
**15.09.82 Bulletin 82/37**

(45) Mention de la délivrance du brevet :
**26.06.85 Bulletin 85/26**

(84) Etats contractants désignés :
**DE FR GB IT**

(56) Documents cités :
**DE-A- 2 205 892**
**FR-A- 2 281 686**
**FR-A- 2 399 163**
**FR-A- 2 450 008**
**ELECTRONICS AND COMMUNICATIONS IN JAPAN,
vol. 52-A, no. 6, juin 1969 New York (US) N. KUROYA-
NAGI et al.: "On Multiplexing Systems for PCM
Hierarchical Networks", pages 13-22**

(73) Titulaire : **Billy, Jean-Claude
Prat Cottel Saint Quay Perros
F-22700 Perros-Guirec (FR)**

(72) Inventeur : **Billy, Jean-Claude
Prat Cottel Saint Quay Perros
F-22700 Perros-Guirec (FR)**

(74) Mandataire : **Le Guen, Louis François
Cabinet Louis Le Guen 1, avenue Edouard VII B.P. 91
F-35802 Dinard Cédex (FR)**

Jouve, 18, rue St-Denis, 75001 Paris, France

## Description

La présente invention concerne un système de multiplexage et de démultiplexage avec justification entre des signaux numériques synchrones à bas débit et des signaux numériques plésiochrones à haut débit.

Dans les réseaux de transmission numérique, on a normalisé plusieurs niveaux hiérarchiques de multiplexage. Ainsi, le multiplex primaire européen regroupe 30 voies et a un débit binaire de 2,048 Mbit/s. Quand on regroupe 4 multiplex primaires, on obtient un multiplex du second ordre qui a un débit binaire de 8,448 Mbit/s. Quand on regroupe 16 multiplex du second ordre, on obtient un multiplex tertiaire, ou encore dit du quatrième ordre, qui a un débit binaire de 139,264 Mbit/s. Entre le multiplex du second ordre et le multiplex tertiaire, il existe encore un niveau dit du troisième ordre dont le débit est de 34,368 Mbit/s.

On rappelle que, dans le cas simple du multiplexage de N signaux numériques de même débit et synchrones, si l'on appelle T la période élémentaire de ces signaux, l'opération de multiplexage temporel consiste à, premièrement, affecter à chaque élément binaire de chaque signal un intervalle de temps $t = T/N$, et, deuxièmement, entrelacer les éléments binaires ainsi réduits de manière à obtenir un signal numérique multiplexé dans lequel le premier élément binaire ou eb provient du signal n° 1, le second eb du signal n° 2, ..., le $n^{ième}$ eb du signal n° N, le $(N + 1)^{ième}$ eb du signal n° 1, le $(N + 2)^{ième}$ eb du signal n° 2, etc.

Actuellement, dans les réseaux réels, les multiplex, quels que soient leurs niveaux hiérarchiques, sont créés à partir d'oscillateurs indépendants. Ils ont un rythme situé dans une plage définie autour du débit nominal commun. Ils sont donc plésiochrones. Au cours d'un multiplexage, on est donc amené à effectuer des justifications. A titre d'exemple de système de multiplexage et de démultiplexage de signaux numériques plésiochrones à bas débit avec justification, on peut citer le système décrit dans le brevet FR-A-2 450 008. On pourra également se reporter aux articles ou brochures suivants :

— Equipements de multiplexage numérique TNM 1-2 de deuxième génération et équipements de surveillance associés, par J-F Portejoie et autres, paru dans la revue technique française « Câbles et Transmission », 32e année, n° 2, avril 1978, pp. 222 à 245,

— Equipement multiplex numérique pour systèmes de lignes à 8 et 34 Mbit/s, par S. Karlsson et autre, paru dans la revue technique en français « Ericsson Review n° 2, 1978, pp. 76-83,

— Digital Multiplex Unit DSMX2/8 for the conversion of $4 \times 2\,048$ kbit/s to 8 448 kbit/s, et Digital Multiplex Unit DSMX8/34 for the conversion of $4 \times 8\,448$ kbit/s to 34 368 kbit/s, distribué par la société Siemens.

Un objet de la présente invention consiste à prévoir un système de multiplexage dans lequel les signaux numériques à plus bas débit ne sont pas plésiochrones, mais synchrones tout en présentant des écarts de phase indépendants.

Un objet particulier de l'invention consiste à prévoir un circuit de commande du circuit d'autorisation de justification utilisable dans un tel système de multiplexage.

Un objet supplémentaire de l'invention consiste à prévoir un terminal comprenant un système de multiplexage et un système de démultiplexage réciproque, ce dernier utilisant avantageusement des circuits du système de multiplexage.

Les objets mentionnés ci-dessus sont atteints par la mise en œuvre des combinaisons de moyens définies dans la partie caractérisante de la revendication 1 ou de la revendication 2 complétée par les revendications dépendantes.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

La figure 1 est un bloc-diagramme schématique d'une unité de multiplexage faisant partie de l'état de la technique,

La figure 2 est un bloc-diagramme schématique d'une unité de démultiplexage faisant partie de l'état de la technique,

La figure 3 est un bloc-diagramme schématique d'une unité de multiplexage suivant l'invention,

La figure 4 est un bloc-diagramme d'une variante d'unité de multiplexage suivant l'invention, et

La figure 5 est un bloc-diagramme d'une variante d'unité de démultiplexage suivant l'invention.

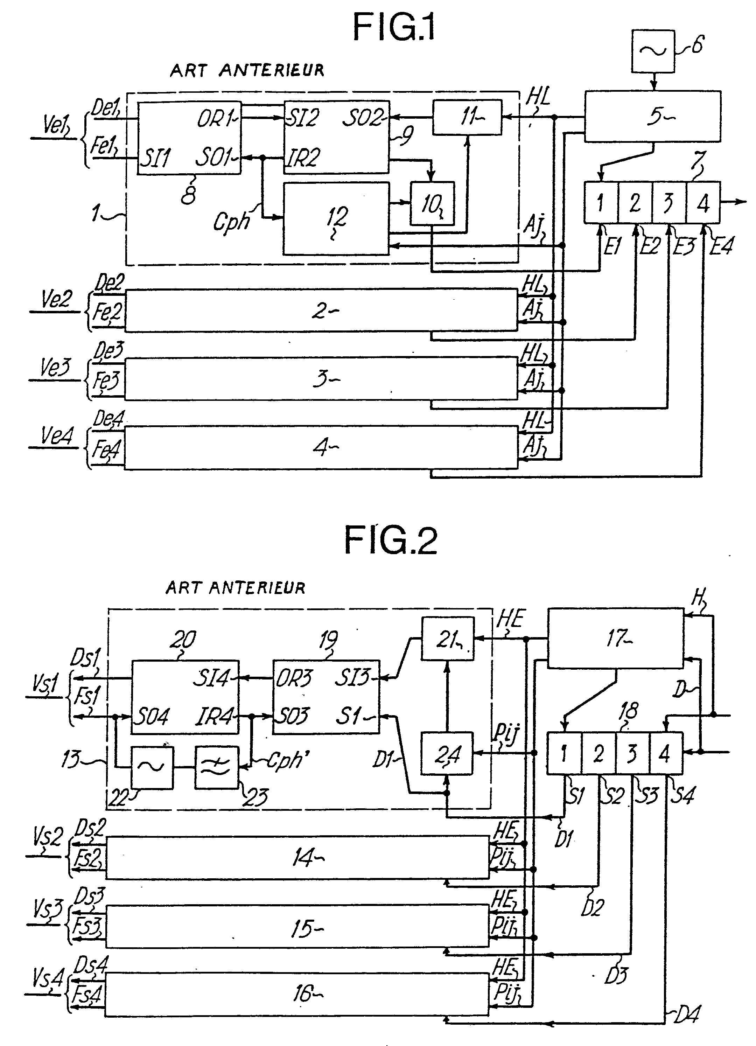

Dans l'unité de multiplexage de la fig. 1, sont prévues quatre unités de synchronisation 1 à 4, une base de temps 5, associée à un oscillateur 6, et un circuit multiplexeur 7. Chaque unité de synchronisation 1 à 4 est respectivement associée à une voie d'entrée multiplex à bas débit Ve1 à Ve4. Chaque voie Ve1 à Ve4 comprend respectivement un fil d'entrée de signal numérique De1 à De4 et un fil d'entrée d'horloge Fe1 à Fe4.

Comme dans le brevet français 2 450 008, l'unité de synchronisation 1 comprend deux mémoires FiFo 8 et 9, montées en série. L'entrée de données de la mémoire 8 est reliée à l'entrée de signal De1 tandis que son entrée SI1 est reliée à l'entrée d'horloge Fe1. La sortie de données de la mémoire FiFo 8 est reliée à l'entrée de données de la mémoire FiFo 9, dont la sortie de données est reliée à l'entrée d'un circuit d'insertion des éléments binaires de justification 10. La sortie OR1 de la mémoire FiFo 8 est reliée à

l'entrée SI2 de la mémoire FiFo 9 dont la sortie IR2 est reliée à l'entrée SO1 de la mémoire FiFo 8. L'entrée SO2 de la mémoire FiFo 9 est reliée à la sortie d'un circuit d'horloge de lecture 11 dont l'entrée HL est reliée à une sortie de la base de temps 5. De plus, la sortie IR2 de la mémoire FiFo 9 est reliée à une entrée de la mémoire de demande de justification 12 dont une entrée de commande est reliée à la sortie Aj de la base de temps 5. Une sortie de circuit 12 est reliée à une entrée de commande du circuit d'insertion de justification 10 tandis qu'une autre sortie est reliée à une entrée de commande du circuit d'horloge 11. La sortie du circuit 10 est reliée à une entrée E1 du circuit multiplexeur 7 dont la sortie délivre le signal multiplexé à haut débit.

Les autres unités de synchronisation 2 à 4 ont des structures identiques à celle de 1.

Le signal Cph de la sortie IR2 de la mémoire FiFo 9 caractérise la variation de phase entre les horloges Fe1 et HL. HL est le signal d'horloge de synchronisation des quatre voies à multiplexer et de lecture des informations. Aj est le signal d'autorisation de la justification, qui indique aussi la position de la justification. Le multiplexeur 7 effectue le multiplexage synchrone des quatre sorties de 10 et insère les éléments binaires systématiques, tels que ceux des mots de verrouillage de trame, les ebs de réserve, etc.

Dans le cas de la fig. 1 où les signaux à multiplexer sont plésiochrones, il faut une unité de synchronisation par voie à multiplexer. Pour chacune des voies composantes, la justification s'effectue à la demande et est fonction des écarts de phase entre l'horloge de lecture fournie par 11 et l'horloge d'écriture des données Fe1 à Fe4. Comme ces horloges Fe1 à Fe4 ne sont pas synchrones, les justifications sont indépendantes dans les unités de synchronisation 1 à 4.

Dans l'unité de démultiplexage de la fig. 2, sont prévues quatre unités de désynchronisation 13 à 16, une base de temps 17, et un circuit démultiplexeur 18. Chaque unité de désynchronisation 13 à 16 est respectivemnt associée à une voie de sortie multiplex à bas débit Vs1 à Vs4. Chaque voie Vs1 à Vs4 comprend respectivement un fil de sortie de signal numérique Ds1 à Ds4 et un fil de sortie d'horloge Fs1 à Fs4.

Comme dans le brevet français 2 450 008, l'unité de désynchronisation 13 comprend deux mémoires FiFo 19 et 20, montées en série. L'entrée de données de la mémoire 19 est reliée à la sortie S1 du démultiplexeur 18 tandis que son entrée SI3 est reliée à la sortie d'un circuit de déjustification 21. La sortie de données de la mémoire FiFo 19 est reliée à l'entrée de données de la mémoire FiFo 20, dont la sortie de données est reliée au fil Ds1. La sortie OR3 de la mémoire FiFo 19 est reliée à l'entrée SI4 de la mémoire FiFo 20 dont la sortie IR4 est reliée à l'entrée SO3 de la mémoire FiFo 19. L'entrée SO4 de la mémoire FiFo 20 est reliée à la sortie d'un oscillateur asservi 22 dont l'entrée de commande est reliée à la sortie d'un filtre passe-bas 23 dont l'entrée est reliée à la sortie IR4 de la mémoire FiFo 20. Une entrée du circuit de déjustification 21 est reliée à une sortie HE de la base de temps 17 tandis que son entrée de commande est reliée à la sortie d'un circuit de lecture des indications de justification 24. Une entrée d'horloge Pij du circuit 24 est reliée à une sortie correspondante de la base de temps 17 tandis que son entrée de données est reliée à la sortie S1 du démultiplexeur 18.

Les autres unités de désynchronisation 14 à 16 ont des structures identiques à celle de 13.

Le signal Cph' de la sortie IR4 de la mémoire FiFo caractérise le résultat de la comparaison de phase entre l'horloge d'écriture 21 et l'horloge délivrée par l'oscillateur 22. Le circuit 21 reçoit de la base de temps 17 l'horloge d'écriture des données reçues et délivre à l'entrée SI3 l'horloge d'écriture de la voie VS1 déjustifiée. Le signal Pij délivré par la base de temps 17 indique les positions des indications de justification. La base de temps 17 est synchronisée en trame par le signal reçu et élabore les différents signaux nécessaires au démultiplexage. Le démultiplexeur 18 effectue un démultiplexage synchrone.

La boucle de verrouillage de phase constituée par 20, 22 et 23 permet de lisser le rythme « à trous » obtenu après démultiplexage du signal résultant, déjustification et suppression des éléments binaires de justification et des éléments binaires ayant servi à la formation de la trame.

Comme on va le voir dans la suite, quand les voies à multiplexer ou démultiplexer sont synchrones, on peut simplifier les équipements et, par la même occasion, améliorer certaines de leurs performances.

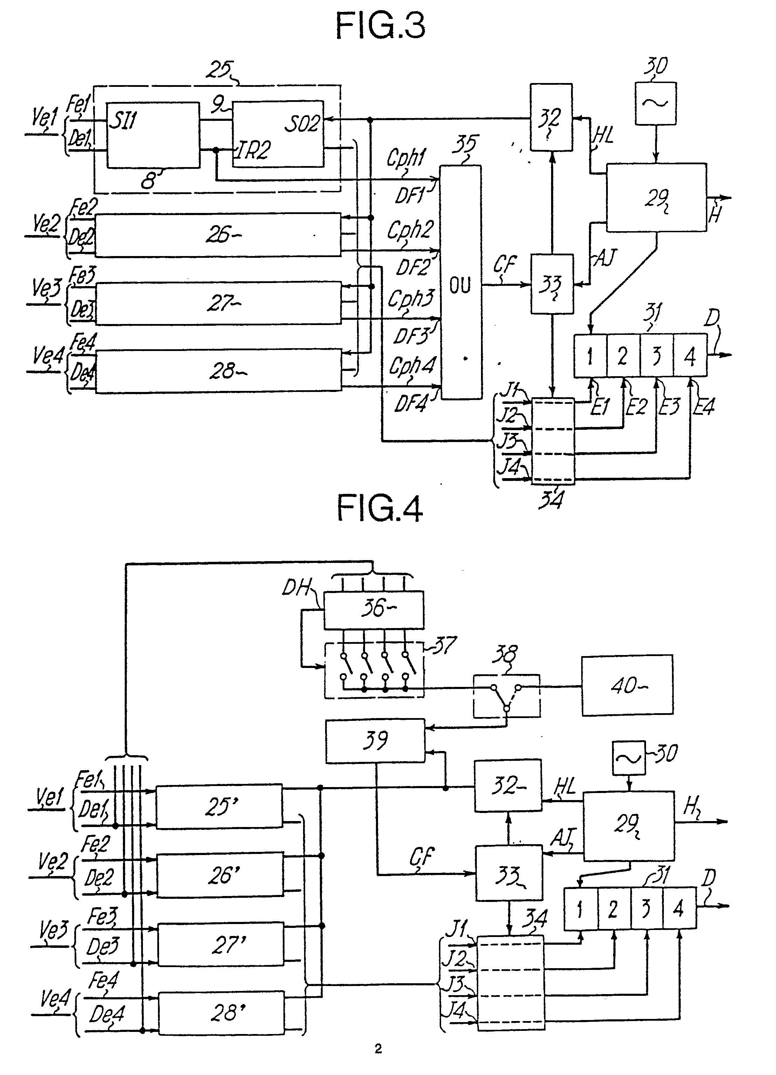

Dans l'unité de multiplexage de la fig. 3, on retrouve les voies d'entrée multiplex à bas débit Ve1 à Ve4 qui sont maintenant supposées être synchrones. Les voies comportent respectivement de fils de transmission de données De1 à De4 et des fils de transmission d'horloge Fe1 à Fe4. Dans l'unité de multiplexage, les voies Ve1 à Ve4 sont respectivement reliées aux entrées de mémoires tampons 25 à 28. L'unité de multiplexage comprend encore une base de temps 29, qui est pilotée par un oscillateur local 30 qui fournit le rythme du signal multiplexé, un multiplexeur 31, un circuit de justification 32, un circuit d'autorisation de justification 33, un circuit d'insertion des éléments binaires d'indication de justification 34 et un circuit OU 35. Chaque mémoire tampon 25 à 28 comprend deux mémoires FiFo 8 et 9 qui sont montées en série exactement de la même manière que les mémoires 8 et 9 de la fig. 1.

Ainsi dans la mémoire 25, l'entrée de données de la mémoire 8 est reliée à l'entrée de signal De1 tandis que son entrée SI1 est reliée à l'entrée d'horloge Fe1. La sortie de données de la mémoire FiFo 9 est reliée à une entrée J1 du circuit 34 d'insertion des éléments binaires d'indication de justification. L'entrée SO2 de la mémoire 9 est reliée à la sortie du circuit d'horloge de lecture 32. La sortie IR2 de la mémoire 9 est reliée à une entrée DF1 de la porte OU 35. En pratique, les mémoires tampons 25 à 28 sont capables d'absorber la gigue que peut présenter chaque signal composant, ainsi que les variations de phases entre leurs horloges d'écriture Fe1 à Fe4 et l'horloge de lecture délivrée par le circuit 32.

Le circuit d'insertion des éléments binaires d'indications de justification 34 comporte quatre entrées de données J1 à J4 respectivement reliées aux sorties de données des mémoires tampons 25 à 28, quatre sorties de données respectivement reliées aux entrées E1 à E4 du multiplexeur 31, et une entrée de commande reliée à une sortie correspondante du circuit d'autorisation de justification 33.

La porte OU 35 comporte quatre entrées DF1 à DF4 respectivement reliées aux sorties IR2 des mémoires 9 des mémoires tampons 25 à 28, et une sortie Cf reliée à l'entrée de commande du circuit d'autorisation de justification 33.

Le circuit d'horloge 32 comporte une entrée d'horloge HL reliée à la sortie correspondante de la base de temps 29, une entrée de commande reliée à la sortie correspondante du circuit 33 et quatre sorties en parallèle respectivement reliées aux entrées d'horloge de lecture des mémoires tampons 25 à 28. Une entrée du circuit 33 est encore reliée à la sortie AJ de la base de temps 29.

Les signaux de comparaison de phase Cph1 à Cph4 appliqués par les mémoires tampons 25 à 28 aux entrées DJ1 à DJ4 de la porte OU 35 traduisent les écarts de phase entre les horloges d'écriture synchrones Fe1 à Fe4 et l'horloge de lecture de 32. Le signal Cf de sortie de la porte OU 35 traduit une demande de justification effectuée sur l'une des voies entrantes. Le signal Cf est traité par le circuit 33, comme le signal Cph, fig. 1, est traité par le circuit 12, et commande la justification qui se traduit par la suppression d'un temps d'horloge dans le circuit 32. Ainsi, la synchronisation entre les horloges d'écriture Fe1 à Fe4 et l'horloge de lecture s'effectue donc à l'aide d'une justification à la demande, mais commune aux quatre voies à multiplexer.

Le tableau ci-dessous montre, à titre d'exemple, la structure d'une trame utilisée au débit de 8 448 kbit/s normalisé, délivrée par un multiplexeur de signaux synchrones.

Tableau

| | GR1 ebJ d'IJ | GR2 ebJ d'IJ | GR3 ebJ d'IJ | |
|---|---|---|---|---|
| Mot de VT 121234 10 ebs | 12341234 | 12341234 | 12341234 | Mot de VT |
| Secteur 1 | Secteur 2 | Secteur 3 | Secteur 4 | |

Dans la trame, à la suite d'une demande de justification, les trois groupes GR1, GR2, GR3 d'indication de justification IJ prennent la même valeur binaire « 1 ». Donc les quatre éléments binaires de justification ebJ des voies 1 à 4 seront des éléments binaires de bourrage et les informations qu'ils contiennent ne seront pas prises en compte lors du démultiplexage.

Comme on l'a dit plus haut, chaque mémoire tampon 25 à 28 doit pouvoir absorber les écarts de phase entre les horloges d'écriture et de lecture. Ces écarts de phase sont dus à la structure de la trame utilisée et à la gigue pouvant exister sur les signaux composants. A titre d'exemple, dans le cas du multiplexeur TNM 2-8 Mbit/s, l'écart de phase maximal correspond à 12/4 = 3 éléments binaires, ce qui correspond au passage du trou à l'emplacement du mot de verrouillage VT. Si la gigue atteint 10 ebs crête à crête, la capacité des mémoires FiFo 8 et 9 sera donc au moins égale à 3 + 10 + 2 = 15 éléments binaires, les deux derniers ebs assurant une sécurité.

Dans l'unité de multiplexage de la fig. 4, on retrouve les voies d'entrée multiplex synchrones à bas débit Ve1 à Ve4, avec leurs fils de transmission de données De1 à De4 et de transmission d'horloge Fe1 à Fe4. Les voies Ve1 à Ve4 sont respectivement reliées aux entrées de mémoires tampons 25' à 28'. L'unité de multiplexage comprend encore une base de temps 29, un oscillateur local 30, un multiplexeur 31, un circuit de justification 32, un circuit d'autorisation de justification 33 et un circuit d'insertion des éléments binaires d'indication de justification 34. Les circuits 29 à 34 sont reliés entre eux et fonctionnent comme ceux de la fig. 3.

Les fils d'entrée Fe1 à Fe4 sont respectivement reliés aux quatre entrées correpondantes d'un circuit de détection de défaut d'horloge 36, qui comporte autant de sorties que d'entrées, plus une sortie de commande DH. Les sorties d'horloge du circuit 36 sont reliées aux entrées de signal d'un sélecteur 37, dont l'entrée de commande est reliée à la sortie DH du circuit 36 et dont la sortie est reliée à une borne d'un inverseur 38 dont le contact mobile est relié à une première entrée d'un comparateur de phase 39. L'autre contact fixe de l'inverseur 38 est reliée à une source d'horloge 40. La seconde entrée du comparateur 39 est reliée à la sortie du circuit 32 tandis que sa sortie est reliée à l'entrée Cf du circuit 33.

Les mémoires tampons 25' à 28' peuvent être des mémoires FiFo simples, au lieu de mémoires FiFo montées en série, comme dans l'exemple de réalisation de la fig. 3.

Le circuit 36 et le sélecteur 37 permettent d'obtenir, dans le multiplexeur, une horloge locale qui est synchrone des horloges des signaux composants, mais qui peut, par rapport à ces signaux, avoir des caractéristiques différentes en gigue. Le circuit 36 peut, en pratique, être un circuit de surveillance du genre de celui qui est décrit dans l'article de la revue « Câbles et Transmission » mentionné ci-dessus ou dans celui de la même revue de décembre 1975, pages 299 à 307, ou encore être un condensateur chargé par les impulsions d'horloge et dont la charge dépasse une certaine valeur quand l'horloge est présente, et tombe au-dessous de cette valeur en cas d'absence. Au lieu d'utiliser la sortie du sélecteur 37 qui

4

délivre ainsi une horloge récupérée, on peut également utiliser la source locale 40 qui délivre un signal synchrone des horloges des signaux composants. Le choix entre les deux solutions, quand il existe, c'est-à-dire quand la source 40 existe, est fait en commutant, par exemple manuellement, le contact de l'inverseur 38. L'utilisation de la source locale 40 peut simplifier la réalisation des systèmes de récupération d'horloge propres à chaque signal composant. De plus, la source locale 40 peut encore être utilisée pour transmettre des signaux d'alarme particuliers, tels que l'émission du signal d'indication d'alarme normalisé synchrone SIA de valeur binaire « tout 1 », à la place du contenu d'une voie composante défaillante.

En pratique, la source 40 est une horloge créée à l'extérieur du circuit de la fig. 4 et qui est synchrone des signaux composants reçus. Bien que synchrone de ces signaux, elle peut avoir des caractéristiques électriques différentes, notamment en gigue. Il faut noter que le signal SIA doit être synchrone des signaux composants absents, donc nécessite une justification à partir de la source 40.

Dans l'exemple de réalisation de la fig. 4, le comparateur de phase 39 effectue une comparaison unique entre l'horloge locale transmise par 38 et de débit Fe et l'horloge de lecture délivrée par 32 et de débit Fl. Le signal délivré par le comparateur 39 correspond au signal Cf, qui était délivré par la porte OU 35 dans l'exemple de la fig. 3. Les opérations de justification sont, à chaque signal Cf émis, effectuées comme dans l'exemple de la fig. 3.

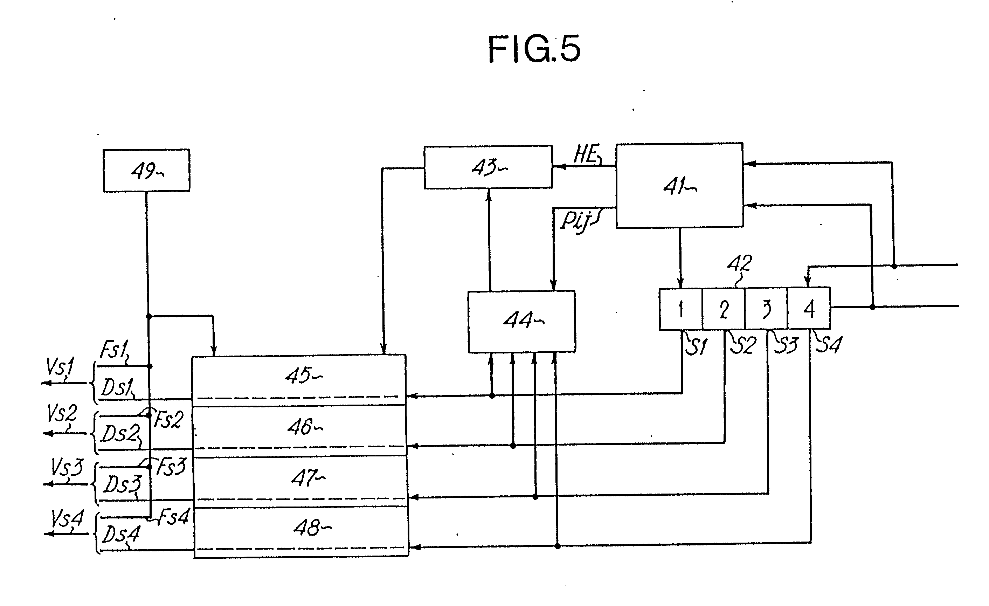

Dans l'unité de démultiplexage de la fig. 5, sont prévus une base de temps 41, un démultiplexeur 42, un circuit de déjustification 43, un circuit de lecture simultanée des indications de justification de quatre voies à démultiplexeur 44, quatre mémoires tampons 45 à 48, qui constituent les unités de désynchronisation, et une source d'horloge de lecture 49. Chaque unité de désynchronisation 45 à 48 est respectivement associée à une voie de sortie multiplex à bas débit Vs1 à Vs4. Chaque voie Vs1 à Vs4 comprend respectivement un fil de sortie de signal numérique Ds1 à Ds4 et un fil de sortie d'horloge Fs1 à Fs4.

L'entrée de données de la mémoire 45 est reliée à la sortie S1 de démultiplexeur 42 tandis que son entrée d'horloge d'écriture est reliée à la sortie du circuit de déjustification 43. La sortie de données de la mémoire 45 est reliée au fil Ds1 de la voie de sortie multiplex Vs1. L'entrée d'horloge de lecture de la mémoire 45 est reliée à la source d'horloge 49, ainsi qu'au fil Fs1 de la voie Vs1. Le circuit 44 est relié, par quatre entrées correspondantes, aux fils de liaison entre les sorties S1 à S4 de 42 et les unités 45 à 48. Le circuit 44 lit ces entrées simultanément pour détecter les indications de justifications, qui se trouvent à des emplacements bien déterminés de chaque trame. Des lectures simultanées, le circuit 44 prend une décision logique suivant un critère de majorité et la décision logique autorise ou non une déjustification qui affecte alors les quatre voies à démultiplexer. La décision majoritaire offre une protection supplémentaire contre les erreurs de transmission. A noter que la base de temps 41 communique au circuit 44 les positions des indications de justification par la liaison Pij et que le circuit 44 est reliée au circuit 43 qui reçoit l'horloge de la base de temps 41 afin d'assurer que l'horloge délivrée par 43 correspond bien aux éléments binaires utiles démultiplexés.

La source d'horloge de lecture 49 est, en pratique, constituée par le circuit 40 de l'unité de multiplexage de la fig. 4.

En pratique, les mémoires 45 à 48 peuvent être constituées par des mémoires FiFo.

Les signaux de Ds1 à Ds4, lus par l'horloge locale de la source 49, sont émis sans gigue résiduelle (en supposant l'horloge locale non giguée), ce qui représente un avantage par rapport aux démultiplexeurs plésiochrones. Or on sait que, dans les systèmes plésiochrones, la gigue résiduelle basse fréquence, dite de temps d'attente, due aux déjustifications, est cumulative au cours des multiplexages et démultiplexages successifs.

L'utilisation de la source disponible dans l'unité de multiplexage permet de réduire les moyens et donc de réduire la complexité et le coût. Elle permet également, au démultiplexage d'effectuer le lissage de l'ensemble des composants dits « à trous » obtenus après démultiplexage et justification.

**Revendications**

1. Système de multiplexage avec justification entre des signaux numériques synchrones à bas débit et des signaux numériques plésiochrones à haut débit, comprenant une base de temps (29), un multiplexeur (31) dont la sortie est reliée à une liaison à haut débit et des unités de synchronisation (25 à 28) incluant des comparateurs de phase et respectivement reliées à des liaisons à bas débit (Ve1 à Ve4), chaque unité de synchronisation ayant une entrée de signal numérique (De1 à De4) et une entrée d'horloge d'écriture (Fe1 à Fe4), caractérisé en ce que les signaux numériques à bas débit sont des signaux synchrones mais affectés de gigues indépendantes, et en ce que le système comprend encore un circuit de justification commun (32) délivrant l'horloge de lecture des unités de synchronisation (25 à 28), un circuit d'autorisation de justification commun (33) dont l'entrée d'horloge (AJ) est reliée à une sortie de la base de temps (29), dont l'entrée de commande est reliée à la sortie d'une porte OU (35) dont les entrées sont reliées aux sorties correspondantes (Cph1 à Cph4) des comparateurs de phase dans les unités de synchronisation (25 à 28), dont une sortie de commande est reliée à l'entrée de commande du circuit de justification (32), et dont la sortie de données est reliée à l'entrée d'un circuit commun (34) d'insertion des éléments binaires d'indication de justification, dont les entrées de données sont

5

respectivement reliées aux sorties des unités de synchronisation (25 à 28) et les sorties aux entrées du multiplexeur (31) qui délivre les signaux numériques à haut débit.

2. Système de multiplexage avec justification entre des signaux numériques à bas débit et des signaux numériques plésiochrones à haut débit, comprenant une base de temps (29), un multiplexeur (31) dont la sortie est reliée à une liaison à haut débit et des unités de synchronisation (25′ à 28′) respectivement reliées à des liaisons à bas débit (Ve1 à Ve4), chaque unité de synchronisation ayant une entrée de signal numérique (De1 à De4) et une entrée d'horloge d'écriture (Fe1 à Fe4), caractérisé en ce que les signaux numériques à bas débit sont des signaux synchrones mais affectés de gigues indépendantes, et en ce que le système comprend encore un circuit de justification commun (32) délivrant l'horloge de lecture des unités de synchronisation (25′ à 28′), un circuit d'autorisation de justification commun (33) dont l'entrée d'horloge (AJ) est reliée à une sortie de la base de temps (29), un circuit de détection de défaut d'horloge (36) dont les entrées sont reliées aux entrées d'horloges d'écriture (Fe1 à Fe4) des unités de synchronisation (25′ à 28′), le circuit de détection comportant autant de sorties que d'entrées et auxquelles il transmet les signaux d'entrée correspondants, un sélecteur (37) de commutation d'une des sorties du circuit de détection vers l'entrée d'un comparateur de phase commun (39), le circuit de détection (36) comprenant encore une sortie de commande (DH) reliée à l'entrée de commande du sélecteur (37), la seconde entrée du comparateur de phase (39) étant reliée à la sortie du circuit de justification (32) et sa sortie à l'entrée de commande du circuit d'autorisation de justification (33).

3. Système suivant la revendication 2, caractérisé en ce que le circuit de détection de défaut d'horloge (36) et le sélecteur de commutation (38) sont remplacés par une source d'horloge locale (40) qui est synchrone des signaux composants appliqués au système de multiplexage, mais indépendante de ces derniers en ce qui concerne notamment la gigue, la sortie de la source d'horloge locale (40) étant reliée à la première entrée du comparateur (39).

4. Système de démultiplexage avec justification entre des signaux numériques plésiochrones à haut débit et des signaux numériques synchrones à bas débit, comprenant une base de temps (41), un démultiplexeur (42) relié à la liaison à haut débit et des unités de désynchronisation (45 à 48) reliées aux liaisons à bas débit, le système de démultiplexage étant associé au système de multiplexage suivant la revendication 3, caractérisé en ce qu'il comprend encore un circuit de déjustification commun (43) dont l'entrée d'horloge est reliée à une sortie correspondante de la base de temps (41) et dont la sortie délivre l'horloge d'écriture des unités de désynchronisation (45 à 48), un circuit de lecture des indications de justification (44) ayant une entrée d'horloge reliée à une sortie correspondante de la base de temps (41), des entrées de données correspondant aux sorties de démultiplexeur (42), et une sortie de commande reliée à l'entrée de commande du circuit de déjustification (43), les entrées des unités de désynchronisation (45 à 48) étant reliées aux sorties correspondantes du démultiplexeur (42) et leurs entrées d'horloge de lecture étant reliées à la source d'horloge locale (40).

5. Terminal de liaison numérique, caractérisé en ce qu'il comprend pour le multiplexage de liaisons synchrones à bas débit, un système suivant la revendication 3 et, pour le démultiplexage de la liaison à haut débit retour, un système suivant la revendication 4.

6. Convertisseur de liaison numérique, caractérisé en ce qu'il comprend pour le multiplexage de liaisons synchrones à bas débit vers une liaison à haut débit aller, un système suivant la revendication 3 et, pour le démultiplexage de la liaison à haut débit retour vers des liaisons synchrones à bas débit, un système suivant la revendication 4.

**Claims**

1. A multiplexing system with justification for multiplexing low rate synchronous digital signals into high rate plesiochronous digital signals, which comprises a time base (29), a multiplexer (31) the output of which is connected to a high rate link and synchronization units (25-28) including phase comparators and respectively connected to low rate links (Ve1-Ve4), each synchronisation unit having a digital signal input (De1-De4) and a write clock input (Fe1-Fe4), characterized in that the low rate digital signals are synchronous but having independant jitters, and in that the system also comprises a common justification circuit (32) delivering the read-out clock of the synchronization units (25-28), a common justification authorization circuit (33) the clock input (AJ) of which is connected from an output of the time base (29), the control input of which is connected from the output of an OR gate (35) the inputs of which are connected from the corresponding outputs (Cph1-Cph4) of phase comparators in the synchronization units (25-28), a control output of which is connected to the control input of the justification circuit (32), and the data output of which is connected to the input of a common circuit (34) for inserting justification indication bits, the data inputs of which are respectively connected from the outputs of the synchronization units (25-28) and the outputs of which are connected to the inputs of the multiplexer (31) which delivers the high rate digital signals.

2. A multiplexing system with justification for multiplexing low rate digital signals into high rate plesiochronous digital signal, comprising a time base (29), a multiplexer (31) the output of which is connected to a high rate link and synchronization units (25′-28′) respectively connected to low rate links

6

(Ve1-Ve4), each synchronization unit having a digital signal input (De1-De4) and a write clock input (Fe1-Fe4), characterized in that the low rate digital signals are synchronous but having independant jiggers, and in that the system also comprises a common justification circuit (32) delivering the read-out clock of the synchronization units (25'-28'), a common justification authorization circuit (33) the clock input (AJ) of which is connected from an output of the time base (29), a clock error detector circuit (36) the inputs of which are connected to the write clock inputs (Fe1-Fe4) of the synchronization units (25'-28'), the detector circuit having as many outputs as inputs and to which it transmits the corresponding input signals, a switching selector (37) switching one of the outputs of the detector circuit to the input of a common phase comparator unit (39), the detector circuit (36) also comprising a control output (DH) connected to the control input of the switching selector (37), the second input of the phase comparator (39) being connected from the output of the justification circuit (32) and the output thereof being connected to the control input of the justification authorization circuit (33).

3. A system according to claim 2, characterized in that the clock error detector circuit (36) and the switching selector (38) are replaced by a local clock source (40) which is synchronous with the component signals applied to the multiplexing system, but independant therefrom concerning the jitter, the output of the local clock source (40) being connected to the first input of the comparator (39).

4. A demultiplexing system with dejustification for demultiplexing high rate plesiochronous digital signals into low rate synchronous digital signals, comprising a time base (41), a demultiplexer (42) connected to the high rate link, the demultiplexing system being associated with the multiplexing system according to claim 3, characterized in that it also comprises a common dejustification circuit (43) the clock input of which is connected from a corresponding output of the time base (41) and the output of which delivers the write clock to the desynchronization units (45-48), a circuit for reading the justification indications (44) having a clock input connected from a corresponding output of the time base (41), data inputs corresponding to the outputs of the demultiplexer (42), and a control output connected to the control input of the dejustification circuit (43), the inputs of the desynchronization units (45-48) being connected from the corresponding outputs of the demultiplexing unit (42) and the read-out clock inputs thereof being connected from the local clock source (40).

5. A digital link terminal, characterized in that it comprises for multiplexing of low rate synchronous links, a system according to claim 3 and, for the demultiplexing of the backward high rate link, a system according to claim 4.

6. A digital link converter, characterized in that it comprises for multiplexing low rate synchronous links to forward high rate link, going, a system according to claim 3 and, for demultiplexing the backward high rate link to synchronous low rate links, a system according to claim 4.

**Patentansprüche**

1. Multiplex-System mit Justifikation zwischen synchronen, digitalen Signalen niedriger Geschwindigkeit und plesiochronen digitalen Signalen hoher Geschwindigkeit, enthaltend eine Zeitbasis (29), einen Multiplexer (31), dessen Ausgang mit einer Hochgeschwindigkeits-Verbindung verbunden ist, und Synchronisationseinheiten (25-28) mit Phasenvergleichs-Schaltungen, die entsprechend mit Niedriggeschwindigkeits-Verbindungen (Ve1 bis Ve4) verbunden sind, wobei jede Synchronisations-Einheit einen Digital-Signal-Eingang (De1 bis De4) und einen Schreib-Takteingang (Fe1 bis Fe4) hat, dadurch gekennzeichnet, daß die digitalen Signale niedriger Geschwindigkeit synchrone Signale sind aber unabhängigen Zeitfehlern unterliegen, und daß das System noch eine gemeinsame Justifikations-Schaltung (32), die den Auslese-Takt der Synchronisations-Einheiten (25 bis 28) liefert, und eine gemeinsame Autorisierungs-Schaltung (33) für die Justifikation enthält, deren Takteingang (AJ) mit einem Ausgang der Zeitbasis (29) verbunden ist, deren Steuereingang mit dem Ausgang eines ODER-Tors (35) verbunden ist, dessen Eingänge mit entsprechenden Ausgängen (Cph1 bis Cph4) von Phasenvergleichs-Schaltungen in den Synchronisations-Einheiten (25 bis 28) verbunden sind, von denen ein Steuereingang mit dem Steuereingang der Justifikations-Schaltung (32) verbunden ist, und deren Datenausgang mit dem Eingang einer gemeinsamen Schaltung (34) zum Einfügen von Justifikations-Anzeige-Bits verbunden ist, deren Dateneingänge jeweils mit den Ausgängen der Synchronisations-Einheiten (25 bis 28) verbunden sind, und deren Ausgänge mit den Eingängen des Multiplexers (31) verbunden sind, der die digitalen Signale hoher Geschwindigkeit liefert.

2. Multiplexer-System mit Justifikation zwischen digitalen Signalen niedriger Geschwindigkeit und plesiochronen digitalen Signalen hoher Geschwindigkeit, enthaltend eine Zeitbasis (29), einen Multiplexer (31), dessen Ausgang mit einer Hochgeschwindigkeitsverbindung verbunden ist, und Synchronisations-Einheiten (25' bis 28'), die entsprechend mit Niedriggeschwindigkeits-Verbindungen (Ve1 bis Ve4) verbunden sind, wobei jede Synchronisations-Einheit einen Digital-Signaleingang (De1 bis De4) und einen Schreib-Takt-Eingang (Fe1 bis Fe4) hat, dadurch gekennzeichnet, daß die digitalen Signale niedriger Geschwindigkeit synchrone Signale sind aber unabhängige Zeitfehler aufweisen, und daß das System ferner enthält eine gemeinsame Justifikations-Schaltung (32), die den Auslesetakt der Synchronisations-Einheiten (25' bis 28') liefert, eine gemeinsame Autorisierungs-Schaltung (33) für die Justifikation, deren Takteingang (AJ) mit einem Ausgang der Zeitbasis (29) verbunden ist, eine Taktefehler-Detektorschaltung (36), deren Eingänge mit den Schreib-Takt-Eingängen (Fe1 bis Fe4) der Synchronisations-Einheiten (25′ bis 28′) verbunden sind, wobei die Detektorschaltung so viele Ausgänge wie Eingänge hat, und zu denen sie die entsprechenden Eingangs-Signale überträgt, einen Wahlschalter (37), um einen der Ausgänge der Detektorschaltung auf den Eingang einer gemeinsamen Phasenvergleichs-Schaltung zu schalten, wobei die Detektor-Schaltung (36) ferner einen Steuerausgang (DH) enthält, der mit dem Steuereingang des Auswahlschalters (37) verbunden ist, und wobei der zweite Eingang der Phasenvergleichs-Schaltung (39) mit dem Ausgang der Justifikations-Schaltung (32) und deren Ausgang mit dem Eingang der Autorisations-Schaltung (33) für die Justifikation verbunden ist.

3. System nach Anspruch 2, dadurch gekennzeichnet, daß die Taktfehler-Detektor-Schaltung (36) und der Wahlschalter (37) durch eine örtliche Taktquelle (40) ersetzt sind, die synchron mit den Komponenten-Signalen ist, die dem Multiplex-System zugeführt werden, aber davon unabhängig in bezug auf Zeitfehler ist, wobei der Ausgang der örtlichen Taktquelle (40) mit dem ersten Eingang der Vergleichs-Schaltung (39) verbunden ist.

4. Demultiplex-System mit Dejustifikation zwischen den plesiochronen digitalen Signalen hoher Geschwindigkeit und synchronen digitalen Signalen niedriger Geschwindigkeit, enthaltend eine Zeitbasis (41), einen Demultiplexer (42), der mit der Hochgeschwindigkeits-Verbindung verbunden ist, und Desynchronisations-Einheiten (45 bis 48), die mit Niedriggeschwindigkeits-Verbindungen verbunden sind, wobei das Demultiplex-System dem Multiplexsystem nach Anspruch 3 zugeordnet ist, dadurch gekennzeichnet, daß es ferner enthält eine Dejustifikations-Schaltung (43), deren Takteingang mit einem entsprechenden Ausgang der Zeitbasis (41) verbunden ist, und deren Ausgang den Schreibtakt zu den Desynchronisations-Einheiten (45 bis 48) liefert, eine Schaltung (44) zum Lesen der Justifikations-Anzeigen mit einem Takteingang, der mit einem entsprechenden Ausgang der Zeitbasis (41) verbunden ist, Dateneingänge, die den Ausgängen des Demultiplexers (42) entsprechen, und einen Steuerausgang, der mit dem Steuereingang der Dejustifikations-Schaltung (43) verbunden ist, wobei die Eingänge der Desynchronisations-Einheiten (45 bis 48) mit den entsprechenden Ausgängen des Demultiplexers (42) und deren Lese-Takt-Eingänge mit der örtlichen Taktquelle (40) verbunden sind.

5. Digitaler Verbindungsanschluß, dadurch gekennzeichnet, daß dieser zum Multiplexen von synchronen Verbindungen geringer Geschwindigkeit ein System gemäß Anspruch 3 und zum Demultiplexen der rückwärtigen Verbindung hoher Geschwindigkeit ein System nach Anspruch 4 umfaßt.

6. Umsetzer für eine digitale Verbindung, dadurch gekennzeichnet, daß dieser zum Multiplexen von synchronen Verbindungen mit geringer Geschwindigkeit zu einer Verbindung mit hoher Geschwindigkeit vorwärts ein System nach Anspruch 3 und zum Demultiplexen der Verbindung mit hoher Geschwindigkeit rückwärts zu den synchronen Verbindungen mit niedriger Geschwindigkeit ein System nach Anspruch 4 enthält.

# FIG.1

ART ANTERIEUR

# FIG.2

ART ANTERIEUR

1

# FIG.3

# FIG.4

FIG.5